(19) **Europäisches Patentamt / European Patent Office / Office européen des brevets**

(11) **EP 3 065 127 A1**

(12) **EUROPEAN PATENT APPLICATION**

(43) Date of publication:
**07.09.2016 Bulletin 2016/36**

(21) Application number: **15305311.1**

(22) Date of filing: **02.03.2015**

(51) Int Cl.:
**G09G 5/02** (2006.01)     **H04N 9/69** (2006.01)
**G06F 3/14** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Olivier, Yannick**
**35576 CESSON-SÉVIGNÉ (FR)**

• **Lasserre, Sébastien**
**35576 CESSON-SÉVIGNÉ (FR)**
• **Le Leannec, Fabrice**
**35576 CESSON-SÉVIGNÉ (FR)**
• **Touze, David**
**35576 CESSON-SÉVIGNÉ (FR)**

(74) Representative: **Barr, Angela Louise**
**Technicolor**
**European Patent Operations**
**1-5 rue Jeanne d'Arc**
**92443 Issy-les-Moulineaux (FR)**

(54) **Method and device for processing image data**

(57)     A method and device for processing image data for transmission via an interface to a display device for the display of High Definition image data, compressing the image data, wherein the compression is adapted to lighting conditions of the display device; and transmitting the compressed data to the display port of the display device via an interface

FIG.1

EP 3 065 127 A1

**Description**

TECHNICAL FIELD

The present invention relates to a method and a device for processing image data. Particularly, but not exclusively, the invention relates to a method and a device for compressing image data for transmission to a display device via a High Definition Multimedia Interface (HDMI)

BACKGROUND

High Definition Display of video data has become increasingly popular and widespread over recent years because of the improvement in image quality and increased resolution compared to earlier ranges of definition.
Ultra High Definition (UHD or UltraHD), for example, also referred to as 4K, provides improved image quality with increased resolution. Such resolutions provide images of increased clarity, more fine detail, greater texture and an almost photographic emulsion of smoothness.
UltraHD television standard defines a video formation with a spatial resolution of 3840*2160 pixels, with a temporal frequency of up to 100 or 120 images per second and coding rate of 30 or 36 bits per pixel (3*10 or 3*12). Such a format represents, in terms of baseband, a significantly high data rate greater than 34Gbs.
A high Definition Multimedia Interface (HDMI) is a digital audio/video interface for transmission of audio/video data, in uncompressed form from an audio/video source device such as a Blu-Ray player or a Set-Top Box to a HD compatible display device, such as HD compatible television.
The drawback of a HDMI link is that it does not currently support the transmission of UltraHD 4K/100Hz video signals. The current version HDMI 1.4 is adapted to spatial resolutions of up to 4K but only up to a maximum frequency of 30Hz. The new version HDMI 2.0 will be adapted to resolutions of 4K up to a maximum frequency of 60Hz. Neither of these versions can handle a rate of 100/120 images per second as required for 4K UltraHD resolution. Moreover, the design of HDMI cables for the current maximum frequencies of HDMI is extremely complex limiting the length of such cables and increasing their manufacturing costs.
The present invention has been devised with the foregoing in mind.

SUMMARY

In a general form the invention concerns the compression of HD image data for HDMI transfer in which the compression is adapted according to the visual properties, such as ambient lighting conditions, of the HD compatible display.
According to a first aspect of the invention there is provided a method of processing image data for transmission via a data link to a display device for the display of High Definition image data, the method comprising:

compressing the image data, wherein the compression is adapted in response to lighting conditions of the display device; and
transmitting the compressed data to the display port of the display device via the data link.

The data link may be a physical connector for the transfer of high definition multimedia data, for example a HDMI.
In an embodiment, compressing the image data comprises transforming the image data into a perceptual space in response to the lighting conditions of the display device; and encoding the image data in the perceptual space
In an embodiment, the lighting conditions are measured by light sensors configured to measure ambient lighting conditions of the display device to provide data representative of the ambient lighting conditions.
In an embodiment, an interrogation signal is sent to the display device in order to obtain data representative of the ambient lighting conditions.
In an embodiment, the perceptual color space is adapted such that it is visually lossless.
In an embodiment, the interface is a HDMI link connected to the display port of the display device.
A second aspect of the invention provides a method of displaying high definition image data on a display device, comprising receiving via a data link, compressed high definition image data, the high definition image link having been compressed based on the lighting conditions of the display device; and decompressing the compressed image data, and displaying the decompressed image data.
In an embodiment, decompressing the image data comprises decoding the image data to obtain image data in a perceptual space; and transforming the image data from the perceptual space on the basis of the light conditions of the display device to a another (non perceptual) color space.
A third aspect of the invention provides a device for processing image data, the device comprising: a data encoder for compression the image data, wherein the compression is adapted to lighting conditions of the display device; and an output port for transmitting the compressed data to the display port of the display device via a data link.

In an embodiment, the encoder is configured to transform the image data into a perceptual space on the basis of the light conditions of the display device; and encode the image data in the color space

In an embodiment, the lighting conditions are measured by light sensors configured to measure ambient lighting conditions of the display device to provide data representative of the lighting conditions.

In an embodiment an interrogation module configured to send an interrogation signal to the display device is provided in order to obtain data representative of the ambient lighting conditions.

In an embodiment, the color space is adapted such that it is visually lossless.

In an embodiment, the output port is a HDMI port.

A fourth aspect of the invention provides a display device displaying high definition image data, comprising an input port for receiving compressed image data via a data link from a device, wherein the image data has been compressed based on the lighting conditions of the display device, a decoder for decompressing the compressed image data, and a display for displaying the decompressed high definition image data.

In an embodiment, the decoder is configured to decode the image data to obtain image data in a perceptual space; and transform the image data from the perceptual space on the basis of the light conditions of the display device to a color space.

In an embodiment, the input port is a HDMI port.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, the present invention may take the form of a computer program product embodied in any tangible medium of expression having computer usable program code embodied in the medium.

Since the present invention can be implemented in software, at least parts of the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RE signal.

BRIEF DESCRIPTION OF THE DRAWINGS

Embodiments of the invention will now be described, by way of example only, and with reference to the following drawings in which:

FIG. 1 is a block diagram schematically illustrating a display system in accordance with an embodiment of the invention;

FIG. 2 is a block diagram of an image compression device in accordance with an embodiment of the invention;

FIG. 3 is a block diagram of a display device in accordance with an embodiment of the invention; and

FIG. 4 is a flow chart illustrating steps of a method of processing image data in accordance with an embodiment of the invention.

DETAILED DESCRIPTION

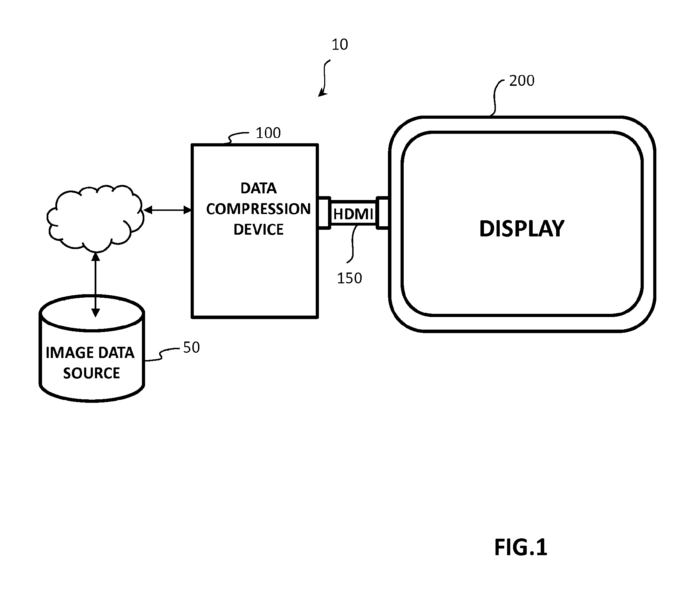

Figure 1 is a block diagram schematically illustrating a display system in which one or more embodiments of the invention may be implemented.

The display system 10 comprises a source of HD image data 50, a data compression device 100, a HDMI link 150, and a HD compatible display device 200.

The HD image data may be representative of a video sequence of images, an image or part of an image, and may be associated with audio data. The source of the HD image data may be an imaging device such as a video camera, a memory device located locally or remotely, such as a remote server, for example a broadcasting server connected to a distribution network. The source of HD image data 50 may be connected to the data compression device 100 via a wireless or wired local connection or via a communication network such as a wireless network, a wired network or a combination of wireless and wired communication links. Compressed data is transmitted from the compression device 100 to the display device via the HDMI connector acting as a data link.

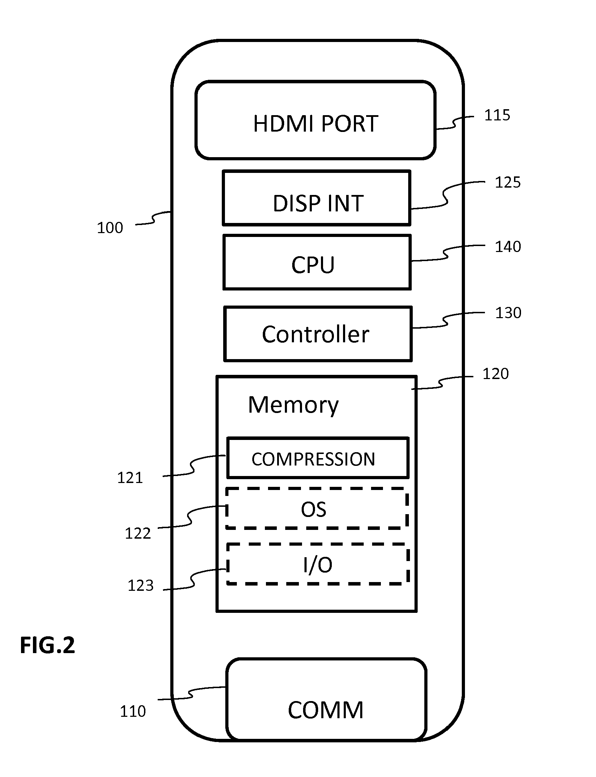

A function of the data compression device 100 is to compress the image data according to lighting conditions of the display device 200. Figure 2 is a block diagram illustrating an image data compression device in accordance with an embodiment of the invention. The image data compression device comprises communication circuitry 110 for receiving image data from an external device, a HDMI interface 115 for connecting to the HDMI link 150, a display unit interface 125 for connection to the display unit 200 to receive data from the display unit 200 representative of the lighting conditions of the display unit 200, memory 120, a memory controller 130 and processing circuitry 140 comprising one or more processing units (CPU(s)) for processing data received from communication circuitry 110. While in this embodiment the display unit interface 125 is illustrated as a separate module, in some embodiments of the invention the data representative of the lighting conditions of the display may be received via the HDMI interface 115 or by the communication module 110.

The one or more processing units 140 run various software programs and/or sets of instructions stored in the memory 120 to perform various functions of the data compression device 100 and to process data.

The memory 120 may include high speed random access memory (RAM) and read only memory (ROM). Memory 120 may also include non-volatile memory, such as one or more magnetic disk storage devices, flash memory devices or other non-volatile solid state memory devices. In some embodiments, the memory may further include storage remotely located from the one or more CPUs . For example, storage accessible via an interface and/or a communication network.

Software modules stored in the memory include an encoder or data compression module (or set of instructions) 121 for compressing image data in accordance with an embodiments of the invention. Other modules may be included such as an operating system module 122 for controlling general system tasks (e.g. power management, memory management) and for facilitating communication between the various hardware and software components of the data compression device 100, and an interface module 123 for controlling and managing communication with other devices via I/O interface ports including the HDMI interface 115.

Communication circuitry 110 is used to receive HD image data from the HD image data source 50. In some embodiments of the invention the communication circuitry 110 is operable to connect with a wired connection. In some embodiments of the invention the communication circuity 110 is operable to connect with a wireless connection. In the case where the communication circuitry 110 is operable for wireless communication to receive HD image data, the communication circuitry 110 includes an antenna for sending and receiving electromagnetic waves and RF (radio frequency) circuitry for converting electromagnetic signals into electrical data signals and for converting electrical data signals into electromagnetic signals. The RF circuitry may include for example an RF transceiver, one or more amplifiers, a tuner, one or more oscillators and a digital signal processor. In some embodiments of the invention the data may be received by terrestrial television broadcast. In some embodiments the compression device may be included in a set top box.

The components of the data compression device 100 communicate over one or more communication buses (not shown).

In some embodiments the device is provided with a power source such as a battery. According to alternative embodiments, the power source may be external to the device

In some embodiments of the invention a user interface may be provided to enable a user to input data to the data compression device, to control the data processing performed.

The HDMI link 150 is a data link for transferring HD image data, compressed in accordance with embodiments of the invention from the image data compression device 100 to the display device 200.

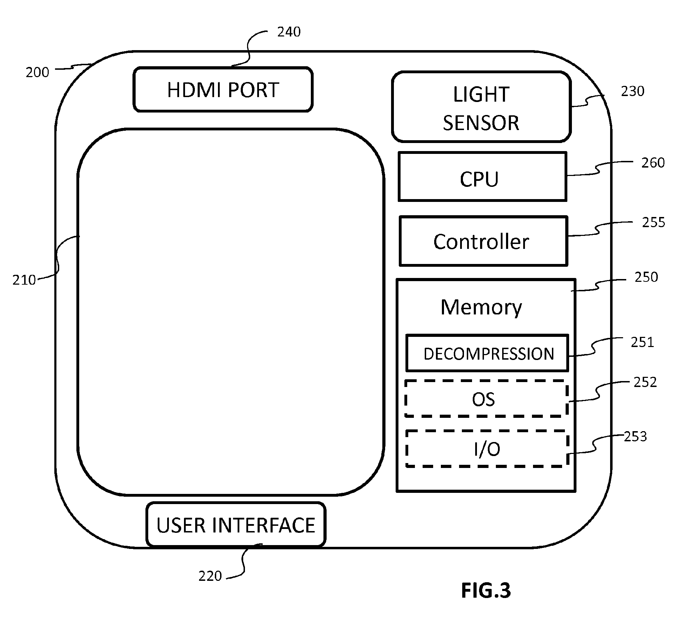

Figure 3 is a block diagram illustrating modules of a HD image display device 200 in accordance with an embodiment of the invention. The functions performed by these modules in the context of the present principles will be described below.

The HD display device 200 is operable to display high definition image data and comprises a display screen 210 for display of HD image data, a user interface 220 for receiving a user input to control the display device remotely and/or locally, one or more light sensors 230 for providing a measurement of the ambient lighting conditions around the display device 200, a HDMI port interface for connecting to the HDMI connector 150 to receive compressed HD image data from the data compression device 100, memory 250, a memory controller 255 and processing circuitry 260 comprising one or more processing units (CPU(s)).

The light sensors 230 may be light sensors provided on the display device for automatic adjustment of display lighting parameters based on the measured ambient light in order to improve the quality of visualization of the display screen 210. It will be appreciated that in other embodiments of the invention the light sensors 230 may be provided separately from the display device 200.

The one or more processing units 260 run various software programs and/or sets of instructions stored in the memory 250 to perform various functions of the display device.

Software modules stored in the memory 250 include a decoder or data decompression module (or set of instructions) 251 for decompressing image data in accordance with an embodiments of the invention. Other modules may be included such as an operating system module 252 for controlling general system tasks (e.g. power management, memory management) and for facilitating communication between the various hardware and software components of the display device 200, and an interface module 253 for controlling and managing communication with other devices via I/O interface ports including the HDMI port 240.

Memory 250 may include high speed random access memory (RAM) and read only memory (ROM). Memory 250 may also include non-volatile memory, such as one or more magnetic disk storage devices, flash memory devices or other non-volatile solid state memory devices. In some embodiments, the memory may further include storage remotely located from the one or more CPUs. For example, storage accessible via an interface and/or a communication network.

In some embodiments the display device 200 is provided with a power source such as a battery. According to alternative embodiments, the power source may be external to the device.

The user interface 220 may include a remote control and/or controls on the display unit 200 for controlling operation of the display unit 200.

The modules illustrated in Figures 2 and 3 may be implemented in various ways known to those skilled in the art. For example, a plurality of such modules may be associated in a unique component or circuit, or correspond to a software module operating in a processor, and/or a combination thereof. Moreover, a module may potentially be composed of separate physical entities or software functionalities.

Devices compatible with embodiments of the invention may be implemented either solely by hardware, solely by software or by a combination of hardware and software. In terms of hardware for example dedicated hardware, may be used, such as, for example ASIC « Application Specific Integrated Circuit », FPGA « Field-Programmable Gate Array »or VLSI, « Very Large Scale Integration »; or by using several integrated electronic components embedded in a device or from a combination of hardware and software components.

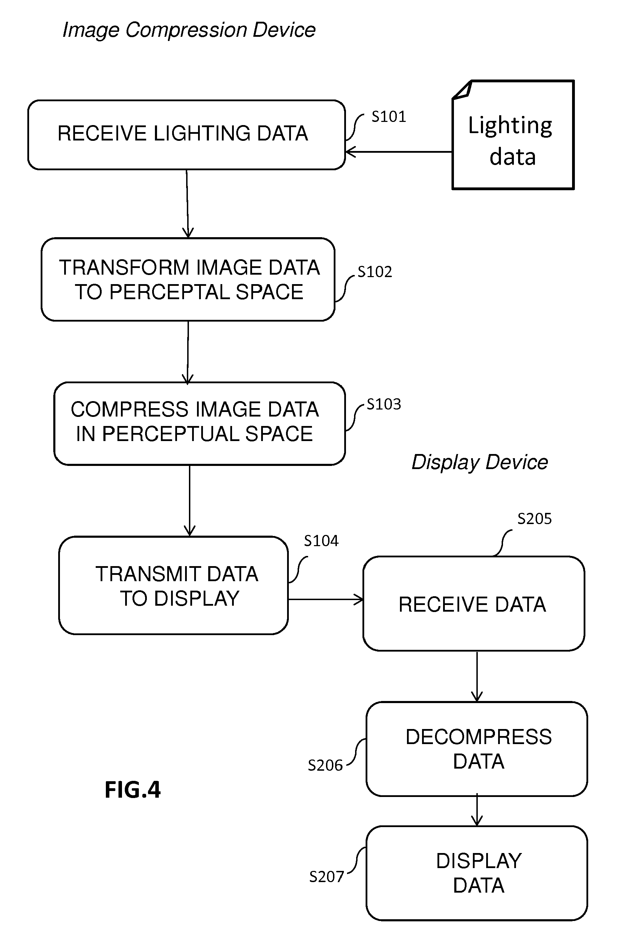

Figure 4 is a flow chart setting out steps of a method for processing image data in accordance with an embodiment of the invention. The steps on the left of the flow chart illustrate steps performed at the image compression device and the steps on the right illustrate steps performed at the display device.

In step S101 data representative of ambient lighting conditions of the display device are obtained from the display device 200. To provide the data representative of ambient lighting conditions light sensors 230 measure the ambient light around the display device 200. To obtain the display lighting data the compression device 100 may send an interrogation signal to the display device 200. In response to the interrogation signal, the display device 200 transmits data representative of the ambient light measured by the light sensors 230 to the data compression device 100. The interrogation may be performed in accordance with the HMI or Display port transmission protocol. Alternatively, the ambient light data may be transmitted to the compression device on a periodic basis and/or when the ambient light data exceeds or falls below a particular threshold. In step S102 the HD image is transformed into a perceptual space.

A perceptual space is defined as a colour space defined by a plurality of components including a luminance component and having a colour difference metric $d((L, C1, C2), (L', C1', C2'))$. The values of the colour difference metric are representative of, preferably proportional to, the differences between the visual perceptions of two points of said perceptual space

Mathematically speaking, the colour difference metric $d((L, C1, C2), (L', C1', C2'))$ is defined such that a perceptual threshold $\Delta E_0$ (also referred to as JND, Just Noticeable Difference) exists, below which a human eye is unable to perceive a visual difference between two colours of the perceptual space, i.e.

$$d\big((L, C1, C2), (L', C1', C2')\big) < \Delta E_0, \qquad (1)$$

Encoding an image whose components belong to a perceptual space such that the metric of equation (1) remains below the bound $\Delta E_0$ ensures that displayed decoded version of the image is visually lossless.

For example the HD image data may be defined in a non-perceptual space such as RGB and transformed into a perceptual space adapted to be visually lossless such as XYZ, or from colour space 709 to colour space Lab or color space YUV to color space Lab.

The transformation of the HD image data into the perceptual space is dependent upon the ambient lighting conditions represented by the display lighting data received from the display device 200. The HD image data is compressed into the perceptual color space in step S103.

In step S104 the compressed image data is transmitted via the HDMI link 150 to the HDMI port of the display device.

In step S205, at the display device, the compressed HD image data is received.

In step S206 the decompressed HD data is decompressed and displayed, in step S207, on the display screen 230 of the display device 200.

A detailed example of the process of image transformation and compression performed in steps S102 and S103 according to a particular embodiment of the invention is outlined below. The transform performed on the HD image data depends on the ambient lighting conditions around the display 200 and on the initial colour space of the image data.

The HD image data received from the image data source is defined, for example, in the RGB color space with a gamma correction applied. The HD image data in the RGB color space is firstly transformed into the XYZ space and then into the perceptual space LabCIE1976 in step S102.

Transforming the HD image data in the initial color (RGB) color space to the linear space (X,Y,Z) includes performing linearization of the image data, where appropriate, by applying an inverse gamma correction and then transforming the linear RGB space data into the XYZ space with a 3x3 transform matrix.

For transformation into the perceptual space Lab CIE1976, data representative of the ambient lighting conditions around the display device 200 is used. For example the data representative of the lighting conditions may be expressed as 3D vector of values $(X_n, Y_n, Z_n)$ in the (X,Y,Z) space.

As an example, a perceptual transform is defined as follows in the case where the perceptual space LabCIE1976 is selected:

$$L^* = 116 f(Y/Y_n) - 16$$

$$a^* = 500\big(f(X/X_n) - f(Y/Y_n)\big)$$

$$b^* = 200\big(f(Y/Y_n) - f(Z/Z_n)\big)$$

where f is a gamma correction function for example given by:

$$f(r) = r^{1/3} \quad if \; r > (6/29)^3$$

$$f(r) = \frac{1}{3} * \left(\frac{29}{6}\right)^2 * r + \frac{4}{29}$$

otherwise

Two colours are humanly distinguishable from one another in the measured lighting conditions $(X_n, Y_n, Z_n)$ of the display when the following colour difference metric defined on the perceptual space LabCIE1976 is satisfied:

$$\Delta(LAB)^2 = d\big((L^*, a^*, b^*),(L^{*\prime}, a^{*\prime}, b^{*\prime})\big)^2 = (\Delta L^*)^2 + (\Delta a^*)^2 + (\Delta b^*)^2 < (\Delta E_0)^2$$

with $\Delta L^*$ being the difference between the luminance components of the two colours ($L^*$, $a^*$, $b^*$) and ($L^{*\prime}$, $a^{*\prime}$, $b^{*\prime}$) and $\Delta a^*$ (respectively $\Delta b^*$) being the difference between the colour components of the two colours. Typically the visually lossless threshold $\Delta E_0$ has a value of between 1 and 2.

The method of compression of the image data is such that after decompression the shift $\Delta(LAB)$ for each pixel with respect to the original pixel is less than the visually lossless threshold $\Delta E_0$. Known codecs such as JPEG, JPEG2000 or other near lossless codec may be used. Video compression techniques such as h264/AVC or HEVC may be used; Simplified versions of such codecs may be used in order to enable real time processing and reduced cost.

When the image data has been compressed the associated bit stream is transmitted to the display device 200 via the HDMI link 150. At the display device the compressed image data is decompressed in the LAB space in step S206

The inverse perceptual transform applied is given by:

$$X = X_n f^{-1}\left(\frac{1}{116}(L^* + 16) + \frac{1}{500} a^*\right)$$

$$Y = Y_n f^{-1}\big(1/116(L^* + 16)\big)$$

$$Z = Z_n f^{-1} \left( \frac{1}{116}(L^* + 16) + \frac{1}{200} b^* \right)$$

Then an inverse 3*3 matrix transform is applied and the original gamma correction function is applied in order to return to the original RGB space for display.

Although the present invention has been described hereinabove with reference to specific embodiments, the present invention is not limited to the specific embodiments, and modifications will be apparent to a skilled person in the art which lie within the scope of the present invention.

For instance, while the foregoing examples have been described with respect to the transformation from a RGB color space, it will be appreciated that the invention may be applied to other color spaces.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

The foregoing has provided by way of exemplary embodiments and nonlimiting examples a description of the method and systems contemplated by the inventor. It is clear that various modifications and adaptations may become apparent to those skilled in the art in view of the description. However, such various modifications and adaptations fall within the scope of the teachings of the various embodiments described above.

The embodiments described herein may be implemented in, for example, a method or a process, an apparatus, a software program, a data stream, or a signal. Even if only discussed in the context of a single form of implementation (for example, discussed only as a method), the implementation of features discussed above may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described embodiments. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired and/or wireless links, as is known. The signal may be stored on a processor-readable medium.

While several embodiments have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present embodiments.

**Claims**

1. A method of processing image data for transmission via a data link to a display device for the display of high definition image data, the method comprising:

   compressing the image data, wherein the compression is adapted according to lighting conditions of a display device; and
   transmitting the compressed image data to a display port of the display device via a data link.

2. A method according to claim 1, wherein compressing the image data comprises
   transforming the image data into a perceptual color space on the basis of the lighting conditions of the display device; and
   encoding the image data in the perceptual color space.

3. A method according to claim 1 or 2, wherein the lighting conditions are measured by light sensors configured to measure ambient lighting conditions of the display device to provide data representative of the ambient lighting conditions.

4. A method according to claim 3, further comprising sending an interrogation signal to the display device requesting data representative of the ambient lighting conditions.

5. A method according to any one of claims 2 to 4, wherein the perceptual color space is adapted such that it is visually lossless.

6. A method according to any preceding claim wherein the data link is a HDMI link connected to the display port of the display device.

7. A method of displaying high definition image data on a display device, comprising
   receiving via a data link, compressed high definition image data, compressed based on lighting conditions of the display device;
   decompressing the compressed image data, and
   displaying the decompressed image data.

8. A method according to claim 7, wherein decompressing the image data comprises
   decoding the image data to obtain image data in a perceptual color space; and
   transforming the image data from the perceptual color space on the basis of the lighting conditions of the display device to another color space.

9. A device for processing image data comprising:

   a data encoder configured to compress the image data , wherein the compression is adapted in response to lighting conditions of the display device; and
   an output port configured to transmit the compressed data to a display port of a display device via a datalink.

10. A device according to claim 9, wherein the encoder is configured to
    transform the image data into a perceptual color space on the basis of the lighting conditions of the display device; and
    encode the image data in the perceptual color space.

11. A device according to claim 9 or 10, wherein the lighting conditions are measured by light sensors configured to measure ambient lighting conditions of the display device to provide data representative of the ambient lighting conditions.

12. A device according to claim 10 or 11, wherein the perceptual color space is adapted such that it is visually lossless.

**13.** A display device for displaying high definition image data, comprising
an input port configured to receive compressed image data via a data link, wherein the image data has been compressed based on the lighting conditions of the display device,
a decoder configured to decompress the compressed image data, and
a display configured to display the decompressed high definition image data.

**14.** A device according to claim 13, wherein the decoder is configured to
decode the image data to obtain image data in a perceptual color space; and
transform the image data from the color perceptual space on the basis of the lighting conditions of the display device to another color space.

**15.** A computer program product for a programmable apparatus, the computer program product comprising a sequence of instructions for implementing a method according to any one of claims 1 to 8 when loaded into and executed by the programmable apparatus.

**FIG.1**

HDMI PORT — 115

DISP INT — 125

CPU — 140

Controller — 130

100

Memory — 120

COMPRESSION — 121

OS — 122

I/O — 123

**FIG.2**

110 — COMM

**FIG.3**

*Image Compression Device*

RECEIVE LIGHTING DATA — S101

Lighting data

TRANSFORM IMAGE DATA TO PERCEPTAL SPACE — S102

COMPRESS IMAGE DATA IN PERCEPTUAL SPACE — S103

*Display Device*

TRANSMIT DATA TO DISPLAY — S104

RECEIVE DATA — S205

DECOMPRESS DATA — S206

DISPLAY DATA — S207

**FIG.4**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/078165 A1 (MESSMER NEIL W [CA] ET AL) 20 March 2014 (2014-03-20) * paragraph [0089] - paragraph [0096]; figures 1,2a * ----- | 1-15 | INV. G09G5/02 H04N9/69 G06F3/14 |

TECHNICAL FIELDS
SEARCHED    (IPC)

G09G
H04N
G06F

The present search report has been drawn up for all claims

| Place of search | Date of completion of the search | Examiner |
|---|---|---|
| The Hague | 14 August 2015 | Le Chapelain, B |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 5311

This annex lists the patent family members relating to the patent documents cited in  the above-mentioned European search report.
The members are as contained in the European Patent Office EDP file on
The European Patent Office is in no way liable for these particulars which are merely given for the purpose of information.

14-08-2015

| Patent document cited in search report | | | Publication date | Patent family member(s) | | | Publication date |
|---|---|---|---|---|---|---|---|
| US 2014078165 | A1 | | 20-03-2014 | CN | 103563347 | A | 05-02-2014 |
| | | | | CN | 103873738 | A | 18-06-2014 |
| | | | | EP | 2716028 | A2 | 09-04-2014 |
| | | | | JP | 2014523661 | A | 11-09-2014 |
| | | | | KR | 20140017645 | A | 11-02-2014 |
| | | | | KR | 20140035517 | A | 21-03-2014 |
| | | | | KR | 20140110071 | A | 16-09-2014 |
| | | | | US | 2014078165 | A1 | 20-03-2014 |
| | | | | WO | 2012166382 | A2 | 06-12-2012 |

EPO FORM P0459

For more details about this annex : see Official Journal of the European Patent Office, No. 12/82